# NEUE EUROPÄISCHE PATENTSCHRIFT

(11) **EP 3 066 918 B2**
(45) Veröffentlichungstag und Bekanntmachung des Hinweises auf die Entscheidung über den Einspruch: **29.03.2023**
(45) Hinweis auf die Patenterteilung: 07.08.2019
(21) Anmeldenummer: 16162689.0
(22) Anmeldetag: 10.06.2010
(51) Int. Cl.: A01K 29/00, A61D 17/00

(54) **OPTISCH GESTÜTZTE NUTZTIERORTUNGSVORRICHTUNG**
OPTICALLY ASSISTED LIVESTOCK LOCATION DEVICE
DISPOSITIF D'ORIENTATION D'ANIMAUX D'ELEVAGE DOTE D'UNE ASSISTANCE OPTIQUE

(30) Priorität: 10.06.2009 DE 202009008268 U
(43) Veröffentlichungstag der Anmeldung: 14.09.2016
(62) Teilanmeldung aus: 10165498.6
(73) Patentinhaber: Big Dutchman International GmbH, 49377 Vechta-Calveslage (DE)
(72) Erfinder: HOLLING, Daniel, 49377 Vechta (DE); MÜLLER, Henning, 49377 Vechta (DE); KRUSE, Klaus, 49377 Vechta (DE)
(74) Vertreter: Eisenführ Speiser

(56) Entgegenhaltungen:
- EP-A1- 1 212 939
- EP-A1- 1 741 408
- EP-A1- 1 900 278
- EP-A2- 0 945 060
- EP-A2- 1 396 188
- WO-A1-2005/034618
- DE-A1- 19 726 938
- DE-A1- 19 918 100
- DE-A1-102007 055 704
- DE-U1-202009 008 268
- FR-A1- 2 759 541

## Beschreibung

Die Erfindung betrifft eine Vorrichtung zur Tierortung und-identifikation, insbesondere zur Identifikation und Ortung von Nutztieren. Ein weiterer Aspekt der Erfindung ist ein Verfahren zur Tierortung und -identifikation.

Vorrichtungen und Verfahren zur Tierortung werden insbesondere in der modernen Nutztierhaltung eingesetzt, um aus einer größeren Menge von Nutztieren ein bestimmtes Nutztier zu identifizieren, beispielsweise um dieses nach erfolgter Identifikation einer tiermedizinischen Untersuchung oder Behandlung zu unterziehen, eine besondere Futtergabe zu verabreichen, es einem anderen Aufenthaltsbereich zuzuführen oder dgl. Unter einem Tierortungsvorgang soll hierbei ein Vorgang verstanden werden, bei dem in reproduzierbarer Weise aus einer Mehrzahl von Tieren, die im Wesentlichen gleiche Körpergrößen, Farbgebungen und sonstige Körpermerkmale aufweisen können, ein einzelnes, bestimmtes Tier herausgefunden wird. Im Zuge einer solchen Tierortung ist es insbesondere erforderlich, das richtige Tier zu finden.

Es ist grundsätzlich bekannt, Nutztiere mittels einer individuellen Kodierung, die beispielsweise eintätowiert, eingebrannt, in sonstiger Weise auf die Haut des Tieres aufgebracht wird oder die in Form eines am Tier befestigten Bandes, Ringes mit eingeprägter oder aufgedruckter Kodierung, wie beispielsweise einem bei Vögeln eingesetzten Fußring, oder mittels eines mithilfe eines separaten Lesegerätes lesbaren Kodierungsträgers,wie beispielsweise einem RFID-Tag, der dem Tier unter die Haut implantiert, als "Knopf im Ohr" oder in anderer Weise befestigt wird, zu charakterisieren. Auf diese Weise kann jedem Tier ein individuelles und für den Nutztierhalter in sicherer Weise zu unterscheidendes Charakterisierungsmerkmal gegeben werden, anhand dessen das Tier in eindeutiger Weise identifizierbar ist. Allerdings steht dieser Vorgehensweise bei der TierOrtung eine Reihe von Nachteilen gegenüber. So ist die jeweils erforderliche individuelle Anbringung des charakterisierenden Merkmals an jedes Nutztier ein aufwändiger Vorgang und insbesondere die kostengünstigen Charakterisierungsmerkmale können durch Verschmutzung unlesbar werden, was die Tierortung verhindern kann. Zudem kann durch Verlust des charakterisierenden Merkmals ein Tier nicht mehr identifizierbar sein, was diese Vorgehensweise bei der Tierortung insbesondere bei einer großen Anzahl von Tieren, die gemeinsam gehalten werden, und den dabei auftretenden mechanischen Belastungen auf die am Tier befestigten charakterisierenden Merkmale unsicher macht.

Schließlich ist ein weiterer entscheidender Nachteil dieser vorbekannten Tierortungsverfahren, dass es zum Auffinden eines bestimmten Tieres in einer Gruppe von mehreren Tieren notwendig werden kann, dass mehrere oder im ungünstigsten Falle alle Tiere zunächst identifiziert werden müssen, bevor auf der so durchgeführten Suche das letztlich gesuchte individuelle einzelne Tier aufgefunden wird. Dies macht die Tierortung für den Nutztierhalter zeitlich aufwändig und erfordert häufig eine mit der Tierortung einhergehende Sortierung der Tiere, um Mehrfachortungen ein und desselben Tieres oder das versehentliche Übersehen und Auslassen eines einzelnen Tieres im Zuge der Suche zu verhindern.

Aus DE 10 2006 048 321 A1 ist es bekannt, Tiere anhand von einzelnen, mittels einer Bilderfassung erkannten Körpermerkmalen zu identifizieren. Zwar kann mit einem solchen Ortungsverfahren vermieden werden, dass die Tiere noch mit einem individuellen Charakterisierungsmerkmal versehen werden müssen, jedoch hat sich das Verfahren als nicht ausreichend zuverlässig in der Differenzierung einer größeren Anzahl von Tieren erwiesen, wenn mit einer für Verarbeitungszwecke zumutbaren Datenmenge bei der Bilderfassung gearbeitet wird bzw. das Verfahren erfordert die Verarbeitung sehr hoher Datenmengen, wenn eine höhere Sicherheit bei der Tierortung erzielt werden soll. Jedoch wird auch dann nicht eine zweifelsfreie Tierortung in größeren Nutztierhaltungen erreicht. Das Verfahren der Tierortung anhand einer Bilderfassung eignet sich darüber hinaus auch nur zur Ortung eines einzelnen Tieres, so dass auch hier zum Auffinden eines bestimmten individuellen Tieres aus einer Mehrzahl von Tieren es erforderlich wird, mehrere, im ungünstigsten Falle alle Tiere zu identifizieren, bis das einzelne, individuell gesuchte Tier identifiziert und somit gefunden wird. Da der Bilderfassungsvorgang in einer vorbestimmten Ausrichtung des Tieres zur Bilderfassungsvorrichtung erfolgen muss, um eine sichere Erfassung der differenzierenden Merkmale zu gewährleisten, ist die einzelne Tierortung bei diesem Vorgehen zeitlich aufwändiger als bei anderen, vorbekannten Verfahren, so dass die insgesamt erforderliche Zeit zum Auffinden eines einzelnen, individuellen Tieres aus einer Mehrzahl von Tieren noch größer ist als bei den vorbekannten Verfahren. EP-A- 1 212 939 offenbart eine Tierortungsvorrichtung gemäß dem ersten Teil des Anspruchs 1 und ein Verfahren zum Orten von Tieren gemäß dem ersten Teil des Anspruchs 11.

Aufgabe der Erfindung ist es daher, eine Vorrichtung und ein Verfahren zur Tierortung bereitzustellen, welche(s) es ermöglicht, ein Tier innerhalb einer kürzeren Zeit als im Stand der Technik aus einer Mehrzahl von gemeinsam gehaltenen Tieren herauszufinden.

Diese Aufgabe wird erfindungsgemäß gelöst durch eine Tierortungsvorrichtung nach Anspruch 1 und dem Verfahren zum Orten von Tieren nach Anspruch 11.

Erfindungsgemäß ist weiterhin eine Merkmalserfassungsvorrichtung vorhanden, die dazu dient, um ein tierindividuelles Merkmal zu erfassen. Die Merkmalserfassungsvorrichtung kann vorzugsweise im Tieraufenthaltsbereich angeordnet sein, um einen Erfassungsvorgang des Merkmals in unmittelbarem Kontakt oder unmittelbarer Nähe zu den jeweiligen Tieren durchzuführen. Die Merkmalserfassungsvorrichtung kann beispielsweise als Lesegerät für ein Ortungs-Tag, welches dem Tier implantiert oder an dem Tier befestigt ist, ausgeführt sein. Der Merkmalserfassungsvorgang muss für die Zwecke der erfindungsgemäßen Tierortung lediglich einmalig erfolgen, da, wie im Weiteren beschrieben wird, nach der Merkmalserfassung das solcherart erfasste Tier mithilfe der Bilderfassungseinrichtung verfolgt wird und so jederzeit wieder zugeordnet und identifiziert werden kann. Aufgrund dieser Funktionsweise der erfindungsgemäßen Tierortungsvorrichtung kann die Merkmalserfassungsvorrichtung beispielsweise als manuell bedienbares Handgerät ausgebildet sein, welches ein Benutzer der Vorrichtung bedient, indem er es neben oder über ein bezüglich des Merkmals zu erfassendes Tier hält, einen als Merkmal dienenden tierindividuellen Code, wie beispielsweise eine Zahlen- und/oder Buchstabenkombination eingibt oder einliest und das Merkmal durch die Anordnung des Handgeräts neben bzw. oberhalb des Tieres diesem Tier zuweist.

Erfindungsgemäß sind die Merkmalserfassungsvorrichtung und die Bilderfassungseinrichtung signaltechnisch mit einer Datenverarbeitungseinrichtung verbunden. Diese Datenverarbeitungseinrichtung erhält somit einerseits von der Merkmalserfassungsvorrichtung ein tierindividuelles Merkmal und andererseits von der Bilderfassungseinrichtung die Bilddaten eines Tieres, welches sich zum Zeitpunkt der Merkmalserfassung im Bereich der Merkmalserfassungsvorrichtung aufhält. Für die Funktion der Erfindung vorteilhaft ist es in diesem Zusammenhang, wenn die Datenverarbeitungseinrichtung ausgebildet ist, um die Merkmalserfassungsvorrichtung durch Bildverarbeitung in dem aufgenommenen Bild zu erkennen, in einfacheren Ausgestaltungen kann die Lage der Merkmalserfassungsvorrichtung jedoch auch innerhalb des Tieraufenthaltsbereichs fixiert und diese fixierte Lage entsprechend einprogrammiert sein, um auf diese Weise die Zuordnung des jeweiligen Tieres zu den jeweils erfassten Merkmalen in sicherer Weise vornehmen zu können.

Die Datenverarbeitungseinrichtung ist dann weiterhin dazu ausgebildet, um jedes einzelne Tier innerhalb des Tieraufenthaltsbereichs in seiner Bewegung solcherart zu verfolgen, dass die Lage jedes einzelnen Tieres auch nach Bewegungen der Tiere noch jeweils einzeln eindeutig bestimmbar ist. Auf diese Weise können Tiere, denen ein individuelles Merkmal mithilfe der Merkmalserfassungsvorrichtung zugewiesen wurden, in ihrer hierauf folgenden Bewegung innerhalb des Tieraufenthaltsbereichs verfolgt werden und somit das tierindividuelle Merkmal dem Tier auch dann noch zugeordnet werden, wenn es sich von der Merkmalserfassungsvorrichtung wegbewegt hat. Über eine gewisse Zeitspanne wird daher erfahrungsgemäß jedes Tier einmal an der Merkmalserfassungsvorrichtung vorbeigehen und hierdurch hinsichtlich seines Merkmals erfasst, so dass dann jedem Tier ein tierindividuelles Merkmal zugeordnet ist und da jedes Tier mithilfe der Bilderfassungseinrichtung und der Datenverarbeitungseinrichtung in seiner Bewegung nach der Merkmalserfassung verfolgt wird, kann zu jedem Zeitpunkt jedes Tier eindeutig hinsichtlich seiner Position im Tieraufenthaltsbereich bestimmt werden. Insbesondere kann eine solche vollständige Erfassung einer Tiermenge in kurzer Zeit erfolgen, wenn die Merkmalserfassungsvorrichtung beispielsweise im Bereich der Tränke oder der Fressstelle der Tiere angeordnet ist.

Weiterhin ist erfindungsgemäß eine Anzeigevorrichtung vorgesehen, welche es ermöglicht, einem Benutzer den Aufenthaltsort eines oder mehrerer Tiere innerhalb des Tieraufenthaltsbereichs anzuzeigen. Diese Anzeigevorrichtung kann beispielsweise als Display ausgebildet sein und kann die identifizierten Tiere bzw. das identifizierte Tier beispielsweise als Umriss mit einer dem Umriss zugeordneten individuellen Kodierung anzeigen. Eine andere Ausgestaltung der Anzeigevorrichtung kann beispielsweise so ausgeführt sein, dass ein Benutzer das tierindividuelle Merkmal, beispielsweise einen Zahlen/Buchstabencode, über eine Benutzerschnittstelle eingibt und daraufhin das diesem individuellen Merkmal entsprechende Tier auf einem Display als farbig hervorgehobener Umriss gegenüber den anderen Umrissen angezeigt wird. Mit der erfindungsgemäßen Tierortungsvorrichtung wird es somit möglich, aus einer Mehrzahl von Tieren innerhalb eines Tieraufenthaltsbereichs, in dem sich diese Tiere untereinander frei bewegen können, zu jedem Zeitpunkt ein bestimmtes gesuchtes Tier herauszufinden, indem man sich dessen Aufenthaltsort innerhalb des Tieraufenthaltsbereichs anzeigen lässt oder ihn entsprechend abliest und dieses solcherart identifizierte und aufgefundene Tier dann gezielt einer Behandlung, Untersuchung oder dgl. zuführen kann.

Erfindungsgemäß ist vorgesehen, dass die Datenverarbeitungseinrichtung ausgebildet ist, um anhand der Verfolgung der Umrisse eines oder mehrerer Tiere einem oder entsprechend mehreren Tieren tierindividuelle Verhaltensmuster zuzuordnen, insbesondere einen Fressvorgang eines Tieres, Kannibalismus unter den Tieren oder ein krankheitstypisches Verhalten. Diese Fortbildung der Erfindung beruht auf der Erkenntnis, dass mit der erfindungsgemäßen Vorrichtung neben der eindeutigen Tierortung auch weitere vorteilhafte Funktionen im Rahmen der Tierhaltung durchgeführt werden können. So kann mit dieser Ausgestaltung aufgrund der laufenden Verfolgung der Bewegung aller Tiere innerhalb des Tieraufenthaltsbereichs festgestellt werden, ob jedes der Tiere sich innerhalb eines bestimmten Zeitraums zumindest einmal am Fressstand befunden hat, woraus geschlossen werden kann, dass dieses Tier Nahrung aufgenommen hat. Tiere, die auffällig selten am Fressstand sind, können mithilfe der erfindungsgemäßen Vorrichtung erfasst werden und gegebenenfalls automatisch als in dieser bestimmten Weise auffällig markiert und auf der Anzeigevorrichtung angezeigt werden. Des Weiteren ist mit der erfindungsgemäßen Vorrichtung das Verhalten der Tiere untereinander verfolgbar. So können Auffälligkeiten, beispielsweise Tiere, die auffällig häufig sich anderen Tieren in direktem Kontakt nähern und somit möglicherweise Kannibalismus zeigen oder aber für Verletzungen sorgen, ebenfalls erfasst, gegebenenfalls markiert und entsprechend angezeigt werden. Die erfindungsgemäße Vorrichtung leistet daher über die vereinfachte Tierortung hinaus auch Kontrollfunktionen, die in direkter Weise mit der Anzeigevorrichtung dem Benutzer der Vorrichtung angezeigt werden können, oder aber auch an eine zentrale Stallüberwachungseinrichtung weitergeleitet werden können, um dort Auffälligkeiten umgehend anzuzeigen. Eine weitere Anwendung dieser Überwachungsfunktion kann beispielsweise darin bestehen, sich auffällig wenig oder gar nicht bewegende Tiere zu erfassen, da diese möglicherweise erkrankt oder verendet sind oder aber in Aufzuchtställen das Hinzukommen neuer Tiere durch Geburt zu erfassen und entsprechend zu melden, indem eine Zählung der innerhalb des Tieraufenthaltsbereichs auftretenden und sich bewegenden Tierumrisse erfolgt und bei Änderung der Anzahl der sich bewegenden Umrisse auf einen entsprechenden Geburtsvorgang rückgeschlossen wird.

Dabei ist die Anzeigevorrichtung ausgebildet, um die Tiere als Symbole innerhalb eines symbolisierten Tieraufenthaltsbereichs anzuzeigen und das oder die Symbol(e) derjenigen Tiere, denen ein bestimmtes tierindividuelles Verhaltensmuster zugeordnet wurde, zu markieren. Bei dieser Ausgestaltung wird auf der Anzeigevorrichtung, beispielsweise auf einem Bildschirm der Anzeigevorrichtung, eine Übersicht über den Tieraufenthaltsbereich gegeben, in dem die Tiere als Symbole, welche beispielsweise als Umriss des Tieres oder als Rassensymbol ausgeführt sein können, an ihrem jeweiligen Aufenthaltsort angezeigt. Dies ermöglicht es einem Benutzer, ein bestimmtes Tier aus der Menge von Tieren in einfacher und schneller Weise anhand der Anzeigevorrichtung herauszufinden. Insbesondere ist bei dieser Ausgestaltung es möglich, dass solche Tiere, die ein bestimmtes, tierindividuelles Verhaltensmuster gezeigt haben und denen dieses Verhaltensmuster daher durch die Tierortungsvorrichtung zugeordnet wurde oder denen dieses Verhaltensmuster vom Benutzer manuell zugeordnet wurde, markiert werden, beispielsweise indem das Symbol in einer dem jeweiligen Verhaltensmuster zugeordneten Farbe dargestellt wird oder das Verhaltensmuster in einem Kürzel oder in Klartext dem Symbol beigefügt wird. Gemäß einer ersten bevorzugten Ausführungsform wird die erfindungsgemäße Tierortungsvorrichtung weitergebildet, indem die Bilderfassungseinrichtung eine Videokamera ist und die Datenverarbeitungseinrichtung solcherart ausgebildet ist, dass die Videokamera in regelmäßigen Zeitabständen für eine Bilderfassung des Tieraufenthaltsbereichs angesteuert wird, insbesondere in Zeitabständen, die abhängig von der Bewegungsgeschwindigkeit der zu identifizierenden Nutztiere solcherart gewählt sind, dass die erfassten Bilder eines sich schnell bewegenden Nutztieres in zwei aufeinander folgenden Bilderfassungen aufgrund ihrer eng benachbarten Lage zueinander ein und demselben Nutztier zugeordnet werden können. Je nachdem, ob es sich bei den zu identifizierenden und folglich auch in ihrer Bewegung zu verfolgenden Tieren um Tiere mit einer trägen Bewegungsart oder einer raschen Bewegungsart handelt, kann gemäß dieser Ausbildungsform der Erfindung eine jeweils angepasste Bildfolgefrequenz vorgesehen sein, um einerseits die sichere Verfolgung der sich bewegenden Tiere zu gewährleisten und andererseits die Menge der zu verarbeitenden Daten so gering wie möglich zu halten. Diese Ausgestaltung ist insbesondere dann vorteilhaft, wenn mehrere Tieraufenthaltsbereiche mit mehreren Bilderfassungseinrichtungen und Merkmalserfassungsvorrichtungen überwacht werden, die solcherart produzierten Daten jedoch von einer zentralen Datenverarbeitungseinrichtung verarbeitet werden, um auf diese Weise die Datenverarbeitungseinrichtung mit einer in Echtzeit zu verarbeitenden Datenmenge zu versorgen. Die Bildfolgefrequenz bzw. der Zeitabstand zwischen zwei aufeinander folgenden Bildern der Bilderfassungseinrichtung kann hierbei zwischen Bruchteilen von Sekunden, beispielsweise 0,1 oder 0,5 s, bis hin zu mehreren Sekunden, beispielsweise 1 oder 5 s liegen.

Gemäß einer weiteren bevorzugten Ausführungsform ist vorgesehen, dass das tierindividuelle Merkmal eine am Tier befestigte Kodierung, insbesondere ein RFID-Tag, ist und die Merkmalserfassungsvorrichtung ein Lesegerät zum Auslesen der am Tier befestigten Kodierung ist. Mit dieser Fortbildung wird eine sichere und automatisierbare Merkmalserfassung am Tier ermöglicht, beispielsweise indem das als Merkmalserfassungsvorrichtung dienende Lesegerät im Bereich einer Fressstelle angeordnet ist und auf diese Weise einerseits das Merkmal eines fressenden Tieres sicher erfasst werden kann und andererseits das Tier in seiner Lage am Fressstand von der Bilderfassungseinrichtung und der hiermit signaltechnisch verbundenen Datenverarbeitungseinrichtung eindeutig erfasst und hierauf folgend verfolgt werden kann.

Insbesondere ist es gemäß einer weiteren bevorzugten Ausführungsform bevorzugt, dass die Bilderfassungsvorrichtung oberhalb des Tieraufenthaltsbereichs angeordnet ist und für eine nach unten gerichtete Bilderfassungsrichtung ausgerichtet ist und/oder dass die Merkmalserfassungsvorrichtung im Tieraufenthaltsbereich angeordnet ist, vorzugsweise innerhalb eines Futterstandes im Tieraufenthaltsbereich. Diese Art der Anordnung der Bilderfassungseinrichtung und der Merkmalserfassungsvorrichtung hat sich für eine sichere TierOrtung als besonders vorteilhaft erwiesen. Allerdings ist zu verstehen, dass je nach der lokalen Situation innerhalb eines Stalls und je nach Art der Bilderfassungseinrichtung und der Merkmalserfassungsvorrichtung auch andere Ausgestaltungen vorteilhaft sein können, beispielsweise schräge Aufnahmerichtungen der Bilderfassungseinrichtung oder als Handgerät ausgeführte mobile Merkmalserfassungsvorrichtungen.

Noch weiter ist es insbesondere bevorzugt, dass die Datenverarbeitungseinrichtung ausgebildet ist, um den Umriss eines von der Bilderfassungseinrichtung erfassten Tieres zu bestimmen, in aufeinanderfolgenden Bilderfassungen zu verfolgen und einem tierindividuellen Merkmal zuzuordnen. Neben Möglichkeiten der Tierverfolgung anhand eines Farbflächenverlaufs, mit dem sich das Tier in der Bilderfassungseinrichtung abbildet, hat sich insbesondere die Ermittlung des Umrisses eines Tieres durch entsprechende Bilddatenverarbeitung als zuverlässige und eindeutige Möglichkeit erwiesen, um ein Tier sicher von anderen Gegenständen innerhalb eines Tieraufenthaltsbereichs zu unterscheiden. Der Umriss eines Tieres lässt darüber hinaus in vielen Anwendungsfällen eine Bestimmung der Ausrichtung des Tieres, d.h. die Lage des Kopfes des Tieres, zu, so dass hieraus eine bevorzugte Bewegungsrichtung des Tieres bestimmbar wird und in der Datenverarbeitungseinrichtung bei der Verfolgung des Umrisses berücksichtigt werden kann. Diese Maßnahme oder auch andere Maßnahmen können somit durch Berücksichtigung logischer Umstände die Verfolgung der Tiere sicherer machen und somit Fehler bei der Tierverfolgung vermeiden helfen.

Bei einer weiteren bevorzugten Ausführungsform wird die erfindungsgemäße Tierortungsvorrichtung fortgebildet durch eine Datenschnittstelle, und dadurch dass die Datenverarbeitungseinrichtung ausgebildet ist, um über die Datenschnittstelle ein Signal an eine Sortervorrichtung auszugeben, welches dazu dient, ein Tier, welches sich im Bereich der Sortereinrichtung befindet und dem zuvor ein bestimmtes tierindividuelles Verhaltensmuster zugeordnet wurde, aus dem Tieraufenthaltsbereich auszusortieren oder es zu kennzeichnen, vorzugsweise durch eine an die Datenschnittstelle angeschlossene Kennzeichnungsvorrichtung, insbesondere eine Farbmarkierungsvorrichtung. Durch diese Fortbildung wird es grundsätzlich ermöglicht, die erfindungsgemäße Tierortungsvorrichtung mit Einrichtungen, die innerhalb des Tieraufenthaltsbereichs angeordnet sind oder mit diesen zusammenwirken, signaltechnisch zu koppeln und auf diese Weise diese Einrichtungen aus der Tierortungsvorrichtung anzusteuern. Bei dieser Fortbildung übernimmt die Tierortungsvorrichtung nicht lediglich Aufgaben im Bereich der Tierüberwachung, -analyse und der Anzeige von im Rahmen dieser Überwachung und Analyse aufgefundenen Tierverhaltensmuster, sondern ist darüber hinaus befähigt, in Abhängigkeit dieser Verhaltensmuster bestimmte Tiere einer Sortervorrichtung zuzuführen, um sie auf diesem Weg beispielsweise in einen getrennten Bereich von den übrigen Tieren zuzuführen oder um sie einem Fütterungsbereich mit spezifischem Sonderfutter zuzuführen oder dgl.

Ein weiterer Aspekt der Erfindung ist eine Tierortungsvorrichtung, insbesondere nach der vorstehend beschriebenen Bauweise, umfassend eine Bilderfassungseinrichtung, welche ausgebildet ist, um innerhalb eines Tieraufenthaltsbereichs eine Mehrzahl von Tieren in Zeitabständen zu erfassen, eine Datenverarbeitungseinrichtung, welche mit der Bilderfassungsvorrichtung signaltechnisch verbunden ist und ausgebildet ist, um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln, welche eine Datenschnittstelle aufweist, wobei die Datenverarbeitungseinrichtung ausgebildet ist, um über die Datenschnittstelle ein Klimasteuerungssignal an eine Klimaeinrichtung für den Tieraufenthaltsbereich auszugeben, wobei das Klimasteuerungssignal in Abhängigkeit bestimmter tierindividueller Verhaltensmuster ausgegeben wird.

Dieser Erfindungsaspekt ermöglicht es, dass die erfindungsgemäße Tierortungsvorrichtung mit allgemeinen Vorrichtungen der Stalltechnik signaltechnisch gekoppelt wird, wie beispielsweise einer Klimaeinrichtung, die das Klima im Stall und insbesondere im Tieraufenthaltsbereich, der von der Bilderfassungseinrichtung erfasst wird, steuert. Auf diese Weise wird es möglich, allgemeine stalltechnische Vorrichtungen in Abhängigkeit von bestimmten, tierindividuellen Verhaltensmustern zu steuern, was eine an die spezifischen Bedürfnisse der Tiere besonders gut angepasste Steuerung der für das Wohlbefinden des Tieres relevanten Parameter ermöglicht. So kann beispielsweise eine zu niedrige Temperatur im Tieraufenthaltsbereich in der Regel daran erkannt werden, dass sich die Tiere im Tieraufenthaltsbereich zu einer engen Gruppe anordnen und bei Feststellen eines solchen tierindividuellen Verhaltensmusters kann folglich ein Klimasteuerungssignal von der Tierortungsvorrichtung ausgegeben werden, welches die Klimaeinrichtung dazu veranlasst, die Temperatur im Stall bzw. im Tieraufenthaltsbereich zu erhöhen.

Noch weiter ist es bevorzugt, wenn die Datenverarbeitungseinrichtung ausgebildet ist, um ein, zwei oder mehrere Körpermerkmale eines Tieres zu erfassen, insbesondere ein Länge-Breite-Verhältnis eines Tieres, eine Größe eines Tieres, eine Farbe eines Tieres, eine Temperatur eines Tieres und/oder eine Farbe eines Tieres, und ein Tier anhand von diesen Körpermerkmalen zu verfolgen und gegebenenfalls nach einer fehlgeschlagenen Verfolgung zwischen zwei aufeinander folgenden Bilderfassungen wiederaufzufinden. Zwar kann grundsätzlich mittels der Verfolgung jedes einzelnen Tieres in den aufeinander folgenden erfassten Bildern der Bilderfassungseinrichtung eine sichere Ortung jedes Tieres zu einem beliebigen Zeitpunkt grundsätzlich gewährleistet werden. Um jedoch eine hohe Sicherheit gegen Fehlortungen bereitzustellen, ist es bevorzugt, wenn hierzu redundante Einrichtungen bereitgestellt sind, die ebenfalls eine sichere Tierortung ermöglichen. Eine solche Tierortung auf einem anderen Weg als der Tierverfolgung kann insbesondere dann erforderlich werden, wenn temporäre Ausfälle der Bilderfassungseinrichtung stattgefunden haben, wenn bestimmte Bereiche des Tieraufenthaltsbereichs nicht von der Bilderfassungseinrichtung eingesehen werden können und dadurch Tiere in einen nicht erfassten Abschnitt des Tieraufenthaltsbereichs hineingehen und hier wieder herauskommen können. In solchen Fällen ist es vorteilhaft, wenn die im Tieraufenthaltsbereich befindlichen Tiere durch zumindest eines, vorzugsweise mehrere Körpermerkmale individuell erfasst sind, so dass auch ohne eine lückenlose Tierverfolgung anhand einer beliebigen Momentaufnahme des Tieraufenthaltsbereichs jedes Tier identifiziert werden kann. Vorteilhafterweise werden hierbei die Körpermerkmale der Tiere dem jeweiligen individuellen Merkmal des Tieres zugeordnet und entsprechend abgespeichert, um so eine unmittelbare Zuordnung zwischen Körpermerkmalen und tierindividuellem Merkmal zu erzielen.

Weiterhin ist es bevorzugt, dass die Anzeigevorrichtung ein Bildschirm ist, auf dem die Tiere durch Symbole innerhalb eines symbolisierten Tieraufenthaltsbereichs angezeigt werden und beim oder im Symbol eines Tiers, vorzugsweise bei oder in den Symbolen von zwei und insbesondere allen Tieren innerhalb des Tieraufenthaltsbereichs das tierindividuelle Merkmal des jeweiligen Tieres angezeigt wird. Mit dieser Ausgestaltung wird dem Benutzer der Vorrichtung eine in einfacher und schneller Weise lesbare Darstellung des Tieraufenthaltsbereichs von einem und insbesondere auch mehreren identifizierten Tieren bereitgestellt. Anhand dieser Darstellung kann der Benutzer ein einzelnes, gesuchtes Tier aus einer größeren Menge von Tieren sicher und schnell herausfinden.

Insbesondere ist es bevorzugt, dass die Tierortungsvorrichtung fortgebildet wird durch eine Eingabevorrichtung zur Eingabe eines tierindividuellen Merkmals, insbesondere einer tierindividuellen Kodierung und weiterhin dadurch gekennzeichnet, dass die Anzeigevorrichtung ausgebildet ist, um die Tiere als Symbole innerhalb eines symbolisierten Tieraufenthaltsbereichs anzuzeigen und das Symbol desjenigen Tieres, welches einem eingegebenen tierindividuellen Merkmal zugeordnet ist, zu markieren. Mittels einer solchen Eingabevorrichtung, die beispielsweise als Tastatur an der Anzeigevorrichtung ausgebildet sein kann, alternativ auch in Form einer Anzeigevorrichtung mit berührungssensitivem Display, welches als Eingabevorrichtung dient, ausgeführt sein kann oder als Lesevorrichtung, die einen Code, wie beispielsweise einen Barcode oder dgl. einlesen kann, ausgeführt sein kann, wird dem Benutzer eine einfache und zuverlässige Möglichkeit bereitgestellt, ein tierindividuelles Merkmal eines gesuchten Tieres einzugeben und sich das Tier auf der Anzeigevorrichtung in gut lesbarer Weise hinsichtlich seines Aufenthaltsortes anzeigen zu lassen. Dabei ist zu verstehen, dass die Tierortungsvorrichtung nach dieser Ausgestaltung auch ausgebildet sein kann, um Oberbegriffe oder Bestandteile zu tierindividuellen Merkmalen über die Eingabevorrichtung aufzunehmen und dann diejenigen Tiere anzuzeigen, auf welche diese Oberbegriffe zutreffen, bzw. die den eingegebenen Bestandteil in ihrem tierindividuellen Merkmal enthalten.

Gemäß einer weiteren bevorzugten Ausführungsform ist die Datenverarbeitungsvorrichtung ausgebildet, um anhand der Bilderfassungsvorrichtung erfasste Tierbehandlungsvorgänge innerhalb des Tieraufenthaltsbereichs zu erfassen und dem jeweils behandelten Tier zuzuordnen. Diese Fortbildung ermöglicht es, an einzelnen Tieren vorgenommene Behandlungsvorgänge innerhalb der Datenverarbeitungsvorrichtung zu erfassen. Dieser Erfassungsvorgang kann beispielsweise solcherart durchgeführt werden, dass ein Benutzer der Vorrichtung, der eine Tierbehandlung an einem Tier vornimmt, im Bereich neben oder oberhalb des Tieres ein für die Bilderfassungseinrichtung erkennbares Signal aussendet, beispielsweise ein zur Bilderfassungseinrichtung gerichtetes kurzes Lichtsignal, anhand dessen die Datenverarbeitungseinrichtung dem Tier einen bestimmten Tierbehandlungsvorgang zuordnen kann. Auf diese Weise wird eine verbesserte Handhabung und Verwaltung von Nutztieren in dem Tieraufenthaltsbereich ermöglicht. Zugleich können Tierbehandlungsvorgänge, die nacheinander an jedem einzelnen der im Tieraufenthaltsbereich befindlichen Tiere durchgeführt werden müssen, in sicherer Weise vollständig durchgeführt werden, da diese Fortbildung es ermöglicht, dass diejenigen Tiere, an denen die Tierbehandlung bereits erfolgreich durchgeführt wurde, entsprechend auf der Anzeigevorrichtung markiert und dargestellt werden, so dass sich anhand der Anzeigevorrichtung in leichter Weise diejenigen Tiere herausfinden lassen, an denen die Tierbehandlung noch vorgenommen werden muss. So können beispielsweise Impfungen eines gesamten Tierbestandes sicher innerhalb des Tieraufenthaltsbereichs durchgeführt werden, ohne dass die Tiere hierzu sortiert oder etwa nacheinander einem anderen Tieraufenthaltsbereich zugeführt werden müssen.

Gemäß einer noch weiteren Fortbildungsform wird eine manuelle Markierungsvorrichtung vorgesehen, welche von einem Benutzer der Tierortungsvorrichtung im Bereich eines Tieres, insbesondere oberhalb eines Tieres ausgelöst werden können und die bei Auslösung ein von der Bilderfassungseinrichtung identifizierbares Signal aussenden, welches von der Datenverarbeitungseinrichtung dem jeweiligen Tier zugeordnet werden. Diese Ausgestaltung ermöglicht in einfacher Weise mithilfe der Tierortungsvorrichtung Überprüfungs- und Behandlungsvorgänge innerhalb eines Tierbestandes, bei denen durch eine oder mehrere Benutzer die Tiere einer manuellen Behandlung, wie beispielsweise einer Zählung, Messung, Impfung oder dgl. unterzogen werden, durchgeführt wird und hierbei der gesamte Tierbestand in zuverlässiger Weise erfasst wird, ohne dass hierzu eine Umsortierung in einen anderen Tieraufenthaltsbereich erforderlich wäre.

Weiterhin kann die erfindungsgemäße Vorrichtung ausgebildet sein, um die erfassten Bilder an eine andere Datenverarbeitungseinrichtung, beispielsweise einen anderen Computer, insbesondere einen mobilen Computer, ein mobiles Telefon, insbesondere ein mobiles Telefon mit Bildwiedergabeeinrichtung, zu übertragen, sobald ein Geburtsvorgang erfasst wird oder sobald eine Komplikation in einem Geburtsvorgang ermittelt wird.

Die erfindungsgemäße Vorrichtung kann weiterhin ausgebildet sein, um das Ende einer Geburt zu erfassen, beispielsweise anhand eines hierfür typischen Bewegungsmusters des Muttertieres oder anhand einer an dem Muttertier vor der Geburt diagnostisch festgestellten Anzahl an zu erwartenden Geburten und Vergleichen dieser vorab diagnostisch ermittelten Anzahl mit den während des gesamten Geburtsvorgangs gezählten Geburten oder anhand einer Bilderfassung und Detektion der Nachgeburt.

Grundsätzlich ist zu verstehen, dass die erfindungsgemäße Tierortungsvorrichtung auch weiter gebildet werden kann durch eine Merkmalserfassungsvorrichtung zum Erfassen eines tierindividuellen Merkmals, und weiterhin dadurch gekennzeichnet, dass die Datenverarbeitungseinrichtung, mit der Merkmalserfassungsvorrichtung signaltechnisch verbunden ist und ausgebildet ist, um ein von der Merkmalserfassungsvorrichtung erfasstes tierindividuelles Merkmal einem von der Bilderfassungseinrichtung erfassten Tier, welches sich im Bereich der Merkmalserfassungsvorrichtung befindet, zuzuordnen und das Tier so zu identifizieren, und um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln und gfs. eine Anzeigevorrichtung, welche ausgebildet ist, um einem Benutzer den Aufenthaltsort eines oder mehrerer erfasster Tiere anzuzeigen.

Mit dieser Fortbildung wird es möglich, ein Tier, welches anhand der Konturerkennung als gebärendes Tier erkannt wurde, eine Identifikationsnummerzuzuordnen und folglich auch eine Signalgebung und Datenübermittlung mit dieser Tieridentifikation durchzuführen sowie weiterhin gegebenenfalls den Standort des gebärenden Tieres weiterzuleiten und anzuzeigen.

Ein weiterer Aspekt der Erfindung ist ein Verfahren nach Anspruch 11.

Mit dem erfindungsgemäßen Verfahren wird eine einfache Ortung eines einzelnen Tieres aus einer Mehrzahl von Tieren, die sich gemeinsam und untereinander frei beweglich in einem gemeinsamen Tieraufenthaltsbereich aufhalten, ermöglicht. Insbesondere kann mit dem erfindungsgemäßen Verfahren ein einzelnes Tier gezielt aus der Mehrzahl von Tieren herausgefunden werden, ohne dass es hierfür erforderlich wäre, mehrere der Tiere nach einem "Trial and Error"-Prinzip zu erfassen, um zu überprüfen, ob diese Tiere dem gesuchten tierindividuellen Merkmal entsprechen.

Dieses Verfahren kann insbesondere mit der zuvor erläuterten Tierortungsvorrichtung oder Teilen davon ausgeführt werden. Weiterhin ist zu verstehen, dass das erfindungsgemäße Verfahren insbesondere solcherart bevorzugt fortgebildet werden kann, dass es diejenigen Verfahrensschritte aufweist bzw. ermöglicht, die durch die zuvor erläuterten Fortbildungen der erfindungsgemäßen Tierortungsvorrichtung bereitgestellt werden.

Eine bevorzugte Ausführungsform wird anhand der anhängenden Figuren beschrieben. Es zeigen:
- Fig. 1: eine schematische Seitenansicht einer in einem Stallbereich installierten erfindungsgemäßen Tierortungsvorrichtung,
- Fig. 2A-E: aufeinander folgende Bildsequenzen einer Bilderfassungseinrichtung der erfindungsgemäßen Tierortungsvorrichtung.

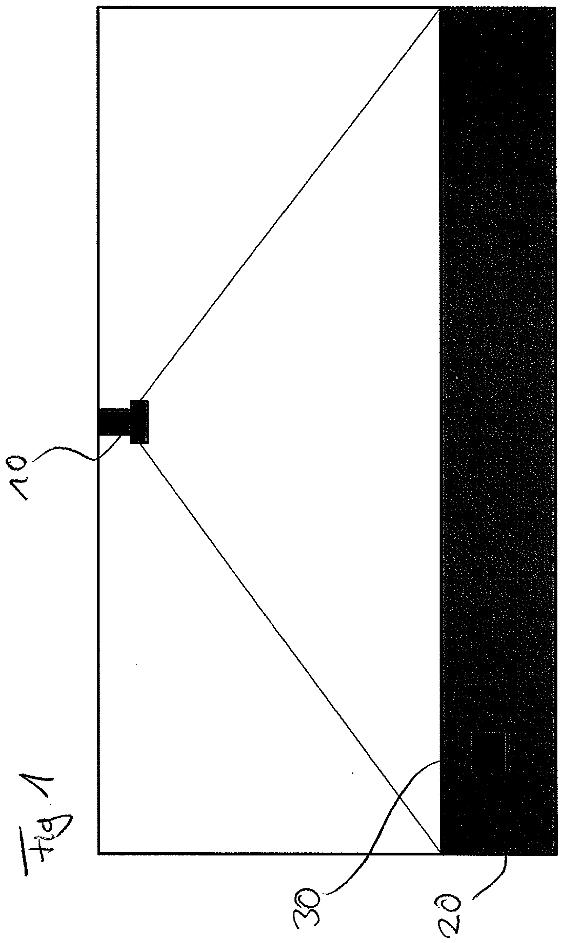

Wie in Fig. 1 zu erkennen, umfasst die erfindungsgemäße Tierortungsvorrichtung eine Bilderfassungseinrichtung 10, die als Videokamera ausgebildet ist und die oberhalb eines Tieraufenthaltsbereichs 20 angeordnet ist. Die Videokamera 10 hat eine senkrecht nach unten ausgerichtete Bildaufnahmerichtung und einen Bildwinkel, der den gesamten Tieraufenthaltsbereich einschließt. Der Tieraufenthaltsbereich ist im gezeigten Beispiel eine Schweinebucht, es ist jedoch zu verstehen, dass der Tieraufenthaltsbereich auch durch zwei oder mehrere nebeneinander angeordnete Schweinebuchten ausgestaltet sein kann. Insbesondere kann die Videokamera 10 genau oberhalb einer Trennwand zwischen zwei separaten Tieraufenthaltsbereichen angeordnet sein und beide Tieraufenthaltsbereiche mit ihrem Bildwinkel erfassen, so dass eine Verfolgung und Ortung von Tieren in beiden Schweinebuchten ermöglicht wird.

Im Tieraufenthaltsbereich ist an einer Seitenwand eine Merkmalserfassungsvorrichtung 30 angeordnet, die als Lesegerät für einen an jedem Tier befindlichen Transponder ausgebildet ist. Der Transponder jedes Tieres gibt an die Lesevorrichtung ein tierindividuelles Merkmal in Form eines individuellen Codes aus, wenn sich das Tier im unmittelbaren Bereich der Lesevorrichtung 30 befindet.

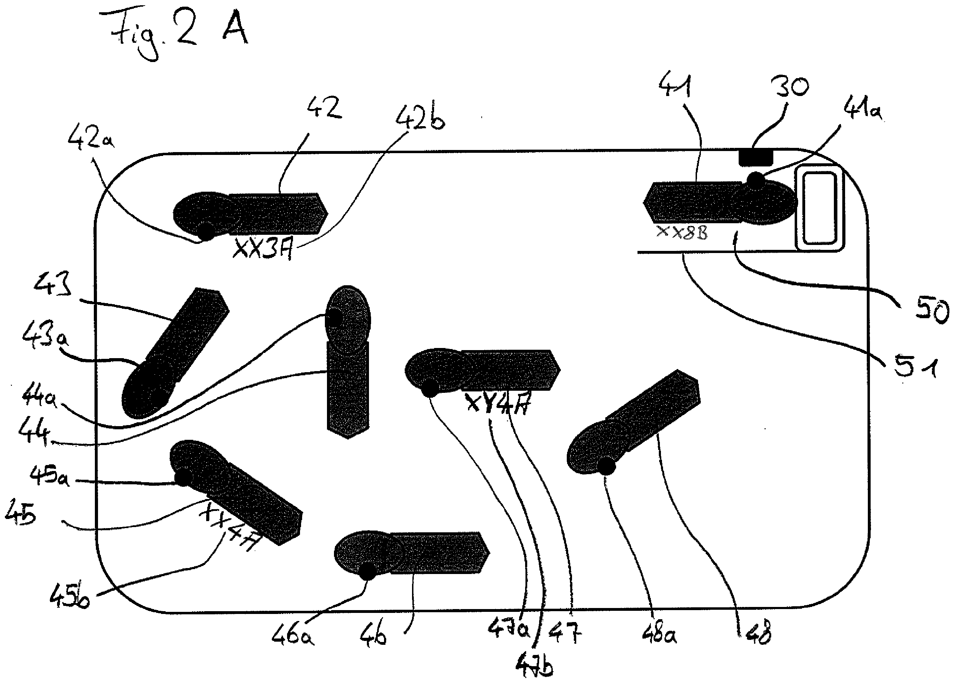

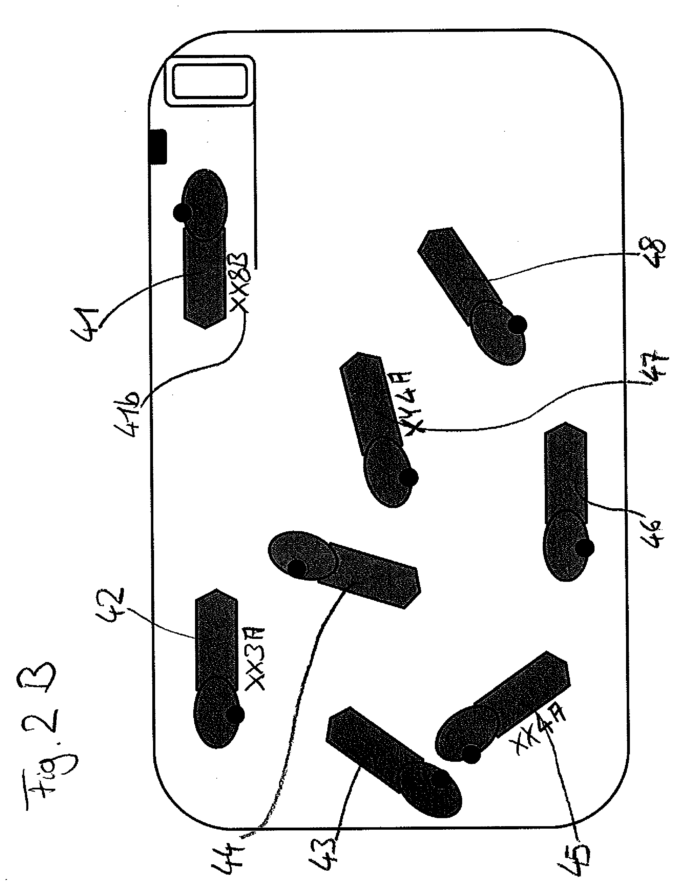

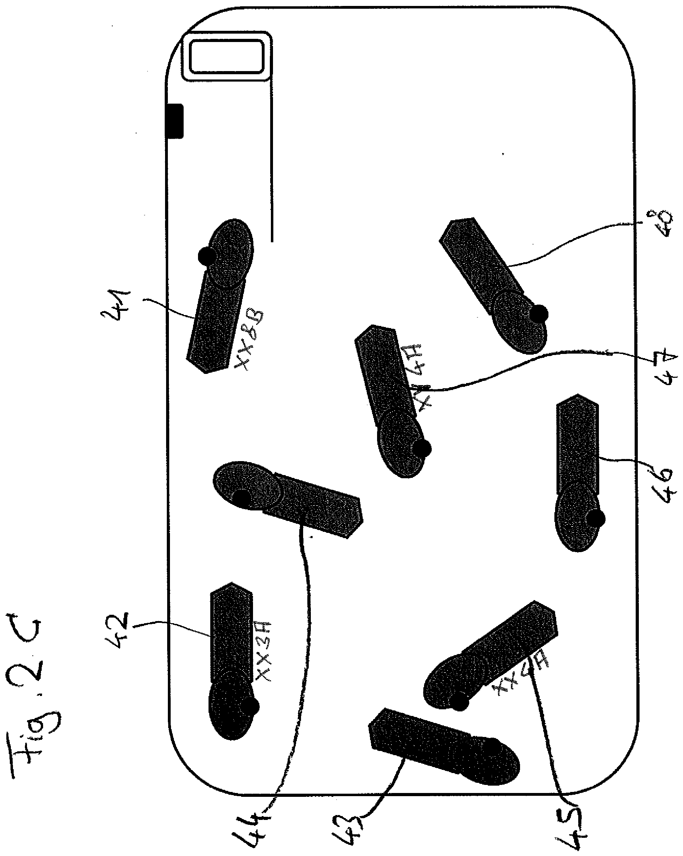

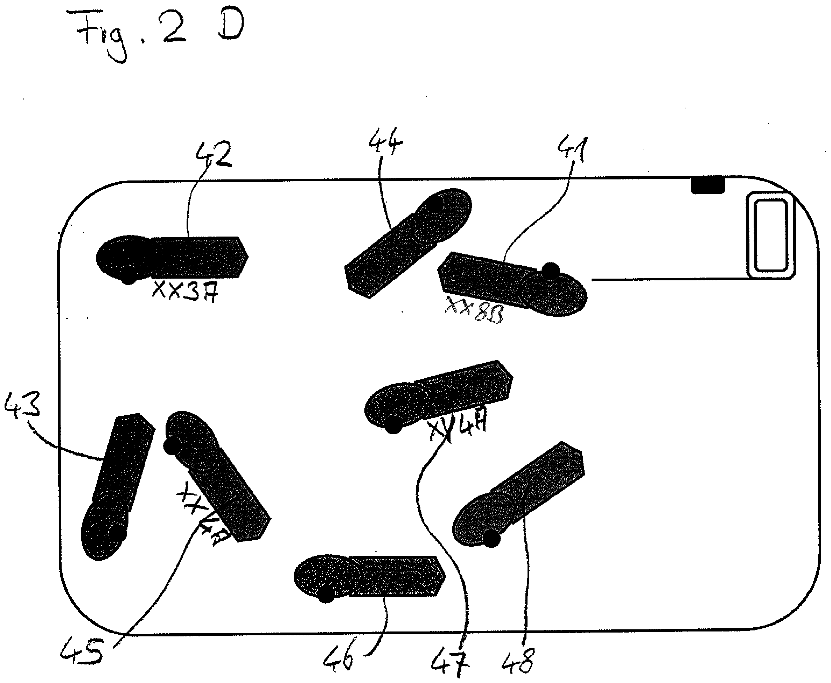

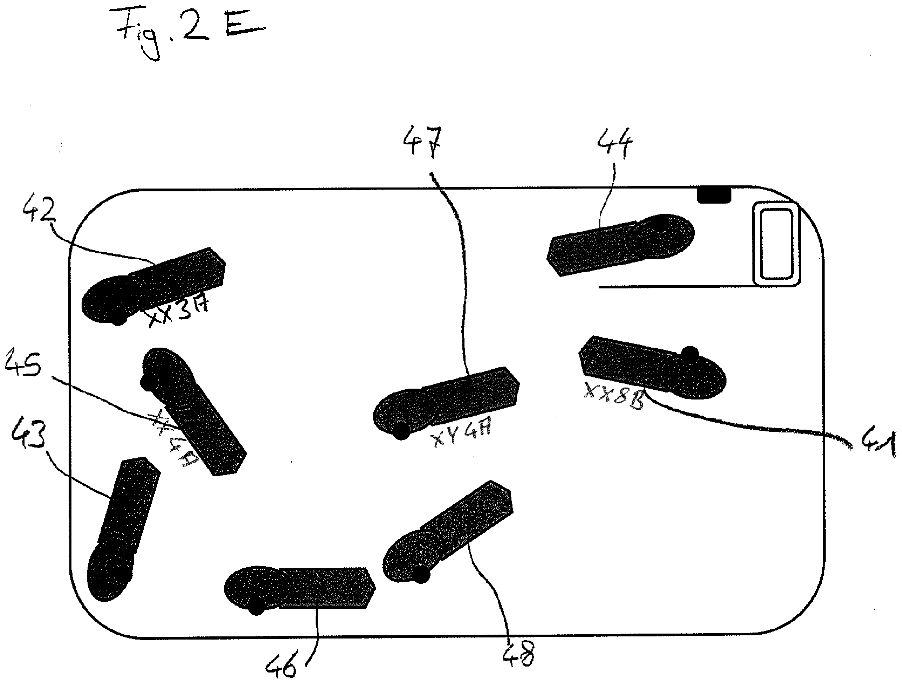

Fig. 2A zeigt eine erste Aufnahme einer Bilderfassungseinrichtung des von der Videokamera 10 überwachten Tieraufenthaltsbereichs. Die Abbildung gemäß Fig. 2A entspricht derjenigen Darstellung, die sich einem Benutzer auf einer als Bildschirm ausgebildeten Anzeigeeinrichtung darstellt, wenn er ein einzelnes Tier aus der Mehrzahl von Tieren finden möchte. Wie man erkennen kann, werden die von der Bilderfassungseinrichtung erfassten Bilddaten von einer Datenverarbeitungseinrichtung (nicht abgebildet) solcherart aufbereitet, dass jedes der Tiere als Umriss erfasst wird und auch als solcher Umriss, der die Ausrichtung des Tieres erkennen lässt, an den Benutzer ausgegeben wird. Jedes der Tiere 41-48 weist einen am Ohr befestigten Transponder auf, der dem Lesegerät 30 ein tierindividuelles Merkmal ausgeben kann.

Wie zu erkennen ist, befindet sich ein Tier 41 im Bereich eines Fressstandes 50, und da das Lesegerät 30 im Bereich des Fressstandes 50 angeordnet ist, kann von diesem Tier das tierindividuelle Merkmal vom Lesegerät 30 erfasst werden. Da sich aufgrund der Trennwand 51 nur jeweils genau ein Tier im Bereich des Fressstandes 50 aufhalten kann, kann das von der Lesevorrichtung 30 erfasste tierindividuelle Merkmal durch die Datenverarbeitungseinrichtung unmittelbar und eindeutig dem durch den Umriss erfassten Tier 41 zugeordnet werden.

Wie den nachfolgenden Bildsequenzen 2B-E zu entnehmen ist, werden die einzelnen Bilderfassungen der Bilderfassungseinrichtung in solchen Zeitabständen ausgeführt, dass sich die Tiere, wenn sie sich zwischen den beiden Bilderfassungen mit ihrer üblichen Geschwindigkeit bewegen, nur so weit von ihrem vorhergehenden Aufenthaltsort wegbewegt haben, dass sich der Umriss des Tieres in der vorhergehenden Aufnahme zu einem überwiegenden Teil mit dem Umriss des Tieres in der nachfolgenden Aufnahme überschneidet. Solche sich in zwei zeitlich aufeinander folgenden Bilderfassungen zu einem Großteil überschneidende Umrisse werden durch die Datenverarbeitungseinrichtung einem einzelnen Tier zugeordnet, das auf diese Weise verfolgt wird. Das dem Umriss der vorhergehenden Aufnahme zugeordnete tierindividuelle Merkmal wird dann auch dem Umriss der nachfolgenden Aufnahme zugeordnet. Auf diese Weise kann das tierindividuelle Merkmal dem Tier weiterhin zugeordnet bleiben, auch wenn es sich aus dem Bereich der Lesevorrichtung 30 entfernt, wie man anhand des Tieres 41 in den Aufnahmen 2A-E erkennen kann.

In dem dargestellten Ausführungsbeispiel sind die Tiere 42, 45 und 47 bereits zuvor im Fressstand gewesen und wurden folglich von der Lesevorrichtung hinsichtlich ihres tierindividuellen Merkmals erfasst, so dass diesen Tieren das jeweilige tierindividuelle Merkmal zugeordnet und auf der Anzeigevorrichtung durch einen entsprechenden Buchstabencode 42b, 45b, 47b angezeigt wird. Die übrigen Tiere 43, 44, 46, 48 waren noch nicht im Fressstand und sind folglich noch nicht hinsichtlich ihres tierindividuellen Merkmals erfasst.

Weiterhin kann man erkennen, dass sich die Tiere 43 und 45 auffällig verhalten, da sie in aufeinander folgenden Bildfolgen eng beisammen stehen. Dies lässt auf die Möglichkeit der gegenseitigen Verletzung dieser Tiere Rückschlüsse zu und die Tiere sind daher als verhaltensauffällig von der Datenverarbeitungseinrichtung klassifiziert worden und werden durch eine rote Farbhinterlegung in der Anzeigevorrichtung dargestellt. Ein Benutzer der Vorrichtung kann daher mit einer mobilen Anzeigevorrichtung an die Schweinebucht herantreten und auf den ersten Blick ein bestimmtes, individuelles Tier bezüglich seines Aufenthaltsortes erkennen, wenn dieses zuvor identifiziert und weiterverfolgt wurde. Weiterhin kann ein Benutzer auf Anhieb verhaltensauffällige Tiere hinsichtlich ihres Aufenthaltsorts erkennen und überprüfen, ob tatsächlich eine Verhaltensauffälligkeit oder entsprechend hieraus resultierende Verletzungen vorliegen.

## Patentansprüche

1. Tierortungsvorrichtung, insbesondere zur Ortung von Nutztieren, umfassend:
- eine Merkmalserfassungsvorrichtung zum Erfassen eines tierindividuellen Merkmals,
- eine Bilderfassungseinrichtung, welche ausgebildet ist, um innerhalb eines Tieraufenthaltsbereichs eine Mehrzahl von Tieren in Zeitabständen zu erfassen,
- eine Datenverarbeitungseinrichtung, welche mit der Merkmalserfassungsvorrichtung und der Bilderfassungsvorrichtung signaltechnisch verbunden ist und ausgebildet ist,
o um ein von der Merkmalserfassungsvorrichtung erfasstes tierindividuelles Merkmal einem von der Bilderfassungseinrichtung erfassten Tier, welches sich im Bereich der Merkmalserfassungsvorrichtung befindet, zuzuordnen und das Tier so zu identifizieren, und
o um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln,
- eine Anzeigevorrichtung, welche ausgebildet ist, um einem Benutzer den Aufenthaltsort eines oder mehrerer identifizierter Tiere anzuzeigen,
**dadurch gekennzeichnet, dass**
- die Datenverarbeitungseinrichtung ausgebildet ist, um anhand der Verfolgung der Umrisse eines oder mehrerer Tiere einem oder entsprechend mehreren Tieren tierindividuelle Verhaltensmuster zuzuordnen, insbesondere einen Fressvorgang eines Tieres, Kannibalismus unter den Tieren oder ein krankheitstypisches Verhalten und dass weiter vorzugsweise
- die Anzeigevorrichtung ausgebildet ist, um die Tiere als Symbole innerhalb eines symbolisierten Tieraufenthaltsbereichs anzuzeigen und das oder die Symbol(e) derjenigen Tiere, denen ein bestimmtes tierindividuelles Verhaltensmuster zugeordnet wurde, zu markieren und/oder
- dass die Anzeigevorrichtung ein Bildschirm ist, auf dem die Tiere durch Symbole innerhalb eines symbolisierten Tieraufenthaltsbereichs angezeigt werden und beim oder im Symbol eines Tier, vorzugsweise bei oder in den Symbolen von zwei und insbesondere allen Tieren innerhalb des Tieraufenthaltsbereichs das tierindividuelle Merkmal des jeweiligen Tieres angezeigt wird.

2. Tierortungsvorrichtung nach Anspruch 1,
**dadurch gekennzeichnet, dass** die Bilderfassungseinrichtung eine Videokamera ist und die Datenverarbeitungseinrichtung solcherart ausgebildet ist, dass die Videokamera in regelmäßigen Zeitabständen für eine Bilderfassung des Tieraufenthaltsbereichs angesteuert wird, insbesondere in Zeitabständen, die abhängig von der Bewegungsgeschwindigkeit der zu identifizierenden Nutztiere solcherart gewählt sind, dass die erfassten Bilder eines sich schnell bewegenden Nutztieres in zwei aufeinanderfolgenden Bilderfassungen aufgrund ihrer eng benachbarten Lage zueinander ein und demselben Nutztier zugeordnet werden können.

3. Tierortungsvorrichtung nach Anspruch 1 oder 2,
**dadurch gekennzeichnet, dass** das tierindividuelle Merkmal eine am Tier befestigte Kodierung, insbesondere ein RFID-Tag, ist und die Merkmalserfassungsvorrichtung ein Lesegerät zum Auslesen der am Tier befestigten Kodierung ist.

4. Tierortungsvorrichtung nach einem der vorhergehenden Ansprüche,
**dadurch gekennzeichnet, dass** die Bilderfassungsvorrichtung oberhalb des Tieraufenthaltsbereichs angeordnet ist und für eine nach unten gerichtete Bilderfassungsrichtung ausgerichtet ist und/ oder dass die Merkmalserfassungsvorrichtung im Tieraufenthaltsbereich angeordnet ist, vorzugsweise innerhalb eines Futterstandes im Tieraufenthaltsbereich.

5. Tierortungsvorrichtung nach einem der vorhergehenden Ansprüche,
**dadurch gekennzeichnet, dass** die Datenverarbeitungseinrichtung ausgebildet ist, um den Umriss eines von der Bilderfassungseinrichtung erfassten Tieres zu bestimmen, in aufeinanderfolgenden Bilderfassungen zu verfolgen und einem tierindividuellen Merkmal zuzuordnen.

6. Tierortungsvorrichtung nach einem der vorhergehenden Ansprüche,
**gekennzeichnet durch** eine Datenschnittstelle, und dadurch dass die Datenverarbeitungseinrichtung ausgebildet ist, um über die Datenschnittstelle ein Signal an eine Sortiervorrichtung auszugeben, welches dazu dient, ein Tier, welches sich im Bereich der Sortiereinrichtung befindet und dem zuvor ein bestimmtes tierindividuelles Verhaltensmuster zugeordnet wurde, aus dem Tieraufenthaltsbereich auszusortieren oder es zu kennzeichnen vorzugsweise durch eine an die Datenschnittstelle angeschlossene Kennzeichnungsvorrichtung, insbesondere eine Farbmarkierungsvorrichtung.

7. Tierortungsvorrichtung nach einem der vorhergehenden Ansprüche, umfassend:
- eine Bilderfassungseinrichtung, welche ausgebildet ist, um innerhalb eines Tieraufenthaltsbereichs eine Mehrzahl von Tieren in Zeitabständen zu erfassen,
- eine Datenverarbeitungseinrichtung, welche mit der Bilderfassungsvorrichtung signaltechnisch verbunden ist und ausgebildet ist,
o um das identifizierte, vorzugsweise eine Mehrzahl von identifizierten Tieren in aufeinanderfolgenden Bilderfassungen der Bilderfassungseinrichtung zu verfolgen und so deren Aufenthaltsort zu ermitteln,
**gekennzeichnet durch** eine Datenschnittstelle, und dadurch dass die Datenverarbeitungseinrichtung ausgebildet ist, um über die Datenschnittstelle ein Klimasteuerungssignal an eine Klimaeinrichtung für den Tieraufenthaltsbereich auszugeben, wobei das Klimasteuerungssignal in Abhängigkeit bestimmter tierindividueller Verhaltensmuster ausgegeben wird.

8. Tierortungsvorrichtung nach einem der vorhergehenden Ansprüche,
**dadurch gekennzeichnet, dass** die Datenverarbeitungseinrichtung ausgebildet ist, um ein, zwei oder mehrere Körpermerkmale eines Tieres zu erfassen, insbesondere
- ein Länge-Breite-Verhältnis eines Tieres ,
- eine Größe eines Tieres,
- eine Farbe eines Tieres,
- eine Temperatur eines Tieres, und/oder
- eine Farbe eines Tieres,
und ein Tier anhand von diesen Körpermerkmalen zu verfolgen und gegebenenfalls nach einer fehlgeschlagenen Verfolgung zwischen zwei aufeinanderfolgenden Bilderfassung wiederaufzufinden.

9. Tierortungsvorrichtung nach einem der vorhergehenden Ansprüche,
**gekennzeichnet durch** eine Eingabevorrichtung zur Eingabe eines tierindividuellen Merkmals, insbesondere einer tierindividuellen Kodierung und weiterhin **dadurch gekennzeichnet, dass** die Anzeigevorrichtung ausgebildet ist, um die Tiere als Symbole innerhalb eines symbolisierten Tieraufenthaltsbereichs anzuzeigen und das Symbol desjenigen Tieres, welches einem eingegebenen tierindividuellen Merkmal zugeordnet ist, zu markieren und/oder
dass die Datenverarbeitungsvorrichtung ausgebildet ist, um anhand der Bilderfassungsvorrichtung erfasste Tierbehandlungsvorgänge innerhalb des Tieraufenthaltsbereichs zu erfassen und dem jeweils behandelten Tier zuzuordnen.

10. Tierortungsvorrichtung nach einem der vorhergehenden Ansprüche,
**gekennzeichnet durch** eine manuelle Markierungsvorrichtung, welche von einem Benutzer der Tierortungsvorrichtung im Bereich eines Tieres, insbesondere oberhalb eines Tieres ausgelöst werden kann und die bei Auslösung ein von der Bilderfassungseinrichtung identifizierbares Signal aussendet welches von der Datenverarbeitungseinrichtung dem jeweiligen Tier zugeordnet werden kann.

11. Verfahren zum Orten von Tieren, insbesondere Nutztieren, mit den Schritten:
- Erfassen eines tierindividuellen Merkmals mittels einer Merkmalserfassungsvorrichtung,
- Bildliches Erfassen einer Mehrzahl von Tieren in Zeitabständen innerhalb eines Tieraufenthaltsbereichs mittels einer Bilderfassungsvorrichtung, die vorzugsweise mit einem von der Merkmalserfassungsvorrichtung verschiedenen Erfassungsverfahren arbeitet und weiter vorzugsweise von der Merkmalserfassungsvorrichtung beabstandet ist,
- Zuordnen eines von der Merkmalserfassungsvorrichtung erfassten tierindividuellen Merkmals zu einem von der Bilderfassungseinrichtung erfassten Tier, welches sich im Bereich der Merkmalserfassungsvorrichtung befindet, und solcherart Identifizieren des Tieres, mittels einer Datenverarbeitungseinrichtung, die mit der Merkmaleserfassungsvorrichtung und der Bilderfassungsvorrichtung signaltechnisch verbunden ist, und
- Verfolgen des so identifizierten, vorzugsweise einer Mehrzahl von so identifizierten Tieren in aufeinanderfolgenden Bilderfassungen der Bilderfassungseinrichtung und solcherart Ermitteln von deren Aufenthaltsort mittels der Datenverarbeitungseinrichtung,
- Anzeigen des Aufenthaltsort eines oder mehrerer identifizierter Tiere an einen Benutzer,
- Zuordnen einem oder mehreren Tiere tierindividuelle Verhaltensmuster anhand der Verfolgung der Umrisse eines oder entsprechend mehrerer Tiere, insbesondere einen Fressvorgang eines Tieres, Kannibalismus unter den Tieren oder ein krankheitstypisches Verhalten mittels der Datenverarbeitungseinrichtung, und weiter
- Anzeigen die Tiere als Symbole innerhalb eines symbolisierten Tieraufenthaltsbereichs in der Anzeigevorrichtung und Markieren des oder der Symbols/Symbole derjenigen Tiere, denen ein bestimmtes tierindividuelles Verhaltensmuster zugeordnet wurde, und/oder
- Anzeigen der Tiere durch Symbole innerhalb eines symbolisierten Tieraufenthaltsbereichs auf einem Bildschirm der Anzeigevorrichtung, und Anzeigen des tierindividuellen Merkmals des jeweiligen Tieres beim oder im Symbol eines Tier, vorzugsweise bei oder in den Symbolen von zwei und insbesondere allen Tieren innerhalb des Tieraufenthaltsbereichs.

## Claims

1. Animal locating device, in particular for locating livestock, comprising:
- a feature detecting device for detecting an animal-specific feature,
- an image capturing device which is configured to detect a plurality of animals within an animal enclosure at time intervals,
- a data processing device which is connected to the feature detecting device and image capturing device by signal transmission and is configured
o to correlate an animal-specific feature detected by the feature detecting device with an animal located in the range of the feature detecting device detected by the image capturing device and thus identify the animal, and
o to track the identified animal, preferably a plurality of identified animals, in successive image captures of the image capturing device and thus determine their location,
- a display device which is configured to display to a user the location of one or more identified animals,
**characterised in that**
- the data processing device is configured to correlate animal-specific behaviour patterns with one or accordingly several animals by tracking the contours of one or more animals, in particular a feeding operation of an animal, cannibalism amongst the animals or a behaviour typical of disease, and preferably furthermore
- the display device is configured to display the animals as symbols within a symbolised animal enclosure and to mark the symbol(s) of those animals with which a specific animal-specific behaviour pattern was correlated and/or
- the display device is a monitor on which the animals are displayed by symbols within a symbolised animal enclosure, and the animal-specific feature of the respective animal is displayed for or in the symbol of an animal, preferably for or in the symbols of two and in particular all the animals within the animal enclosure.

2. Animal locating device as claimed in claim 1,
**characterised in that** the image capturing device is a video camera and the data processing device is configured in such a way that the video camera is activated at regular time intervals for an image capture of the animal enclosure, in particular at time intervals selected in such a way that, depending on the speed of movement of the livestock to be identified, the captured images of a rapidly moving animal in two successive image captures can be correlated with one and the same animal due to their closely adjacent position relative to one another.

3. Animal locating device as claimed in claim 1 or 2,
**characterised in that** the animal-specific feature is a code attached to the animal, in particular an RFID tag, and the feature detecting device is a reading device for reading the code attached to the animal.

4. Animal locating device as claimed in one of the preceding claims,
**characterised in that** the image capturing device is disposed above the animal enclosure and is oriented for a downwardly oriented image capturing direction and/or the feature detecting device is disposed in the animal enclosure, preferably inside a feeding trough in the animal enclosure.

5. Animal locating device as claimed in one of the preceding claims,
**characterised in that** the data processing device is configured to determine the contour of an animal captured by the image capturing device, track it in successive image captures and correlate it with an animal-specific feature.

6. Animal locating device as claimed in one of the preceding claims,
**characterised by** a data interface and in that the data processing device is configured to transmit a signal via the data interface to a sorting device which is used to sort out from the animal enclosure an animal that is located in the range of the sorting device and with which a specific animal-specific behaviour pattern was previously correlated or to identify it, preferably by means of an identification device connected to the data interface, in particular a colour marking device.

7. Animal locating device as claimed in one of the preceding claims, comprising:
- an image capturing device which is configured to detect a plurality of animals within an animal enclosure at time intervals,
- a data processing device which is connected to the image capturing device by signal transmission and is configured
o to track the identified animal, preferably a plurality of identified animals, in successive image captures of the image capturing device and thus determine their location,
**characterised by** a data interface and in that the data processing device is configured to transmit an air conditioning control signal via the data interface to an air conditioning device for the animal enclosure, the air conditioning control signal being transmitted depending on specific animal-specific behaviour patterns.

8. Animal locating device as claimed in one of the preceding claims,
**characterised in that** the data processing device is configured to detect one, two or more body features of an animal, in particular
- a length-width ratio of an animal,
- a size of an animal,
- a colour of an animal,
- a temperature of an animal, and/or
- a colour of an animal,
and to track and if necessary relocate an animal on the basis of these body features after a failed tracking operation between two successive image captures.

9. Animal locating device as claimed in one of the preceding claims,
**characterised by** an input device for inputting an animal-specific feature, in particular an animal-specific code, and further **characterised in that** the display device is configured to display the animals as symbols within a symbolised animal enclosure and to mark the symbol of that animal with which an input animal-specific feature was correlated and/or
**in that** the data processing device is configured to detect animal treatment procedures within the animal enclosure detected by the image capturing device and to correlate them with the respectively treated animal.

10. Animal locating device as claimed in one of the preceding claims,
**characterised by** a manual marking device which can be triggered by a user of the animal locating device in the region of an animal, in particular above an animal, and which, when triggered, transmits a signal identifiable by the image capturing device which can be correlated with the respective animal by the data processing device.

11. Method for locating animals, in particular livestock, comprising the steps:
- detecting an animal-specific feature by means of a feature detecting device,
- detecting by imaging a plurality of animals within an animal enclosure at time intervals by means of an image capturing device which preferably operates using a different detection method from the feature detecting device and preferably also spaced at a distance apart from the feature detecting device,
- correlating an animal-specific feature detected by the feature detecting device with an animal located in the range of the feature detecting device detected by the image capturing device and identifying the animal in such a manner, by means of a data processing device coupled to the feature detecting device and the image capturing device for signal transmission, and
- tracking the animal thus identified, preferably a plurality of animals thus identified, in successive image captures of the image capturing device and determining their location in such a manner, by means of the data processing device,
- displaying the location of one or more identified animals to a user, **characterised by** the steps
- correlating animal-specific behaviour patterns with one or more animals by tracking the contours of one or accordingly several animal(s), in particular a feeding operation of an animal, cannibalism amongst the animals or a behaviour typical of disease, by means of the data processing device, and also
- displaying the animals as symbols within a symbolised animal enclosure in the display device and marking the symbol/symbols of those animals with which a specific animal-specific behaviour pattern was correlated, and/or
- displaying the animals by means of symbols within a symbolised animal enclosure on a monitor of the display device and displaying the animal-specific feature of the respective animal for or in the symbol of an animal, preferably for or in the symbols of two and in particular all the animals within the animal enclosure.

## Revendications

1. Dispositif de localisation d'animaux, en particulier servant à la localisation d'animaux de ferme, comprenant :
- un dispositif de détection de caractéristique servant à détecter une caractéristique propre à l'animal,
- un système de détection par images qui est configuré de sorte à détecter, dans une zone de séjour des animaux, une pluralité d'animaux à des intervalles de temps donnés,
- un système de traitement de données, qui est relié au dispositif de détection de caractéristique et au système de détection par images selon une technique de signaux et qui est configuré de sorte
- à associer une caractéristique propre à l'animal détectée par le dispositif de détection de caractéristique à un animal détecté par le système de détection par images, lequel animal se trouve dans la zone du dispositif de détection de caractéristique, et afin d'identifier ainsi l'animal, et
- à suivre l'animal identifié, de préférence une pluralité d'animaux identifiés, dans des images prises successivement du système de détection par images et de déterminer ainsi leur emplacement,
- un dispositif d'affichage qui est configuré de sorte à indiquer à un utilisateur l'emplacement d'un ou de plusieurs animaux identifiés,
**caractérisé en ce que**
- le système de traitement des données est configuré de sorte à associer, à l'aide du suivi des silhouettes d'un ou de plusieurs animaux, des types de comportement propres aux animaux à un ou, de manière correspondante, à plusieurs animaux, en particulier une action d'alimentation d'un animal, le cannibalisme parmi les animaux ou un comportement typique d'une maladie, et **en ce que** de préférence
- le dispositif d'affichage est configuré de sorte à indiquer les animaux sous la forme de symboles dans une zone d'emplacement des animaux représentée par des symboles et de marquer le ou les symboles des animaux, auxquels précisément un type de comportement propre aux animaux défini a été associé, et/ou
- **en ce que** le dispositif d'affichage est un écran, sur lequel les animaux sont indiqués par des symboles dans la zone d'emplacement des animaux représentée par des symboles et sur lequel la caractéristique propre à l'animal de l'animal respectif est indiquée pour ou dans le symbole d'un animal, de préférence pour ou dans les symboles de deux et, en particulier, de tous les animaux dans la zone d'emplacement des animaux.

2. Dispositif de localisation d'animaux selon la revendication 1,
**caractérisé en ce que** le système de détection par images est une caméra vidéo, et **en ce que** le système de traitement de données est configuré de sorte que la caméra vidéo est commandée à des intervalles de temps réguliers en vue d'images prises de la zone de l'emplacement des animaux, en particulier à des intervalles de temps qui sont choisis en fonction de la vitesse de déplacement des animaux de ferme à identifier de telle manière que les images prises d'un animal se déplaçant à grande vitesse peuvent être associées, dans deux images prises successivement, du fait de leur position étroitement voisine, à un seul et même animal de ferme.

3. Dispositif de localisation d'animaux selon la revendication 1 ou 2,
**caractérisé en ce que** la caractéristique propre à l'animal est un codage fixé au niveau de l'animal, en particulier une étiquette RFID, et **en ce que** le dispositif de détection de caractéristique est un appareil de lecture servant à lire le codage fixé au niveau de l'animal.

4. Dispositif de localisation d'animaux selon l'une quelconque des revendications précédentes,
**caractérisé en ce que** le dispositif de détection par images est disposé au-dessus de la zone de l'emplacement des animaux et est orienté pour une direction de prise d'images orientée vers le bas, et/ou **en ce que** le dispositif de détection de caractéristique est disposé dans la zone d'emplacement des animaux, de préférence dans une mangeoire dans la zone d'emplacement des animaux.

5. Dispositif de localisation d'animaux selon l'une quelconque des revendications précédentes,
**caractérisé en ce que** le système de traitement des données est configuré de sorte à définir la silhouette d'un animal détecté par le système de détection par images, de le suivre dans des images prises successivement et de l'associer à une caractéristique propre à l'animal.

6. Dispositif de localisation d'animaux selon l'une quelconque des revendications précédentes,
**caractérisé par** une interface de données, et en ce que le système de traitement de données est configuré de sorte à émettre, par l'intermédiaire de l'interface de données, un signal à un dispositif de tri, qui sert à trier un animal, qui se trouve dans la zone du système de tri et auquel un type de comportement propre à l'animal défini a été associé au préalable, parmi la zone d'emplacement de l'animal ou à l'identifier, de préférence par un dispositif d'identification raccordé à l'interface de données, en particulier un dispositif de marquage par couleurs.

7. Dispositif de localisation d'animaux selon l'une quelconque des revendications précédentes, comprenant :
- un système de détection par images, qui est réalisé afin de détecter, dans une zone d'emplacement des animaux, une pluralité d'animaux à des intervalles de temps donnés,
- un système de traitement de données qui est relié selon une technique de signal au dispositif de détection par images et qui est réalisé
- afin de suivre l'animal identifié, de préférence une pluralité d'animaux identifiés dans des images prises successivement, du système de détection par images et afin de déterminer ainsi leur emplacement,
**caractérisé par** une interface de données, et en ce que le système de traitement de données est réalisé afin d'émettre, par l'intermédiaire de l'interface de données, un signal de commande de climatisation à un système de climatisation pour la zone d'emplacement des animaux, le signal de commande de climatisation étant émis en fonction de types de comportement propres à l'animal définis.

8. Dispositif de localisation d'animaux selon l'une quelconque des revendications précédentes,
**caractérisé en ce que** le système de traitement de données est réalisé afin de détecter une, deux ou plusieurs caractéristiques corporelles d'un animal, en particulier
- un rapport longueur-largeur d'un animal,
- une taille d'un animal,
- une couleur d'un animal,
- une température d'un animal, et/ou
- une couleur d'un animal,
et afin de suivre un animal à l'aide desdites caractéristiques corporelles et, éventuellement, de le retrouver, suite à un suivi ayant échoué entre deux images prises successivement.

9. Dispositif de localisation d'animaux selon l'une quelconque des revendications précédentes,
**caractérisé par** un dispositif d'entrée servant à entrer une caractéristique propre à l'animal, en particulier un codage propre à l'animal, et par ailleurs **caractérisé en ce que** le dispositif d'affichage est réalisé afin d'afficher sous la forme de symboles les animaux dans une zone d'emplacement des animaux représentée par un symbole, et de marquer le symbole de l'animal, qui précisément est associé à une caractéristique entrée propre à l'animal, et/ou
**en ce que** le dispositif de traitement de données est réalisé afin de détecter dans la zone d'emplacement des animaux des opérations de traitement d'animaux détectées à l'aide du dispositif de détection par images et de les associer à l'animal respectivement traité.

10. Dispositif de localisation d'animaux selon l'une quelconque des revendications précédentes,
**caractérisé par** un dispositif de marquage manuel, qui peut être déclenché par un utilisateur du dispositif de localisation d'animaux dans la zone d'un animal, en particulier au-dessus d'un animal, et qui envoie, lors d'un déclenchement, un signal pouvant être identifié par le système de détection par images, lequel signal peut être associé à l'animal respectif par le système de traitement de données.

11. Procédé servant à localiser des animaux, en particulier des animaux de ferme, comprenant les étapes qui suivent :
- la détection d'une caractéristique propre à l'animal au moyen d'un dispositif de détection de caractéristique ;
- la détection sous forme d'image d'une pluralité d'animaux à des intervalles de temps donnés dans une zone d'emplacement d'animaux au moyen d'un système de détection par images, qui fonctionne de préférence avec un procédé de détection différent du dispositif de détection de caractéristique et qui est davantage tenu à distance de préférence du dispositif de détection de caractéristique ;
- l'association d'une caractéristique propre à l'animal détectée par le dispositif de détection de caractéristique à un animal détecté par le système de détection par images, lequel se trouve dans la zone du dispositif de détection de caractéristique et l'identification de cette manière de l'animal au moyen d'un système de traitement de données, qui est relié au dispositif de détection de caractéristique et au système de détection par images selon une technique de signaux; et
- le suivi de l'animal ainsi identifié, de préférence d'une pluralité d'animaux ainsi identifiés dans des images prises successivement du système de détection par images et la détermination de cette manière de leur emplacement, au moyen du système de traitement de données;
- l'indication de l'emplacement d'un animal ou de plusieurs animaux identifiés à un utilisateur,
- l'association de types de comportement propres aux animaux à un ou à plusieurs animaux à l'aide du suivi des silhouettes d'un ou de plusieurs animaux de manière correspondante, en particulier une action d'alimentation d'un animal, le cannibalisme parmi les animaux ou un comportement typique d'une maladie, et par ailleurs, au moyen d'un système de traitement de données
- l'affichage des animaux sous la forme de symboles dans une zone d'emplacement des animaux représentée par des symboles dans le dispositif d'affichage et le marquage du ou des symboles des animaux, auxquels précisément un type de comportement propre aux animaux défini a été associé, et/ou
- l'affichage des animaux par des symboles dans une zone d'emplacement des animaux représentée par des symboles sur un écran du dispositif d'affichage et l'affichage de la caractéristique propre à l'animal de l'animal respectif pour ou dans le symbole d'un animal, de préférence pour ou dans les symboles de deux et, en particulier, de tous les animaux dans la zone d'emplacement des animaux.
